# EUROPÄISCHE PATENTANMELDUNG

(11) **EP 1 061 759 A1**
(43) Veröffentlichungstag der Anmeldung: **20.12.2000**
(21) Anmeldenummer: 99304397.5
(22) Anmeldetag: 31.05.1999
(51) Int. Cl.: H04Q 7/38

(54) **Verfahren zur Übertragung von Informationen über Funkzellen in einem Funk-Kommunikationssystem**

(71) Anmelder: SIEMENS AKTIENGESELLSCHAFT, 80333 München (DE)
(72) Erfinder: Dillinger, Markus, 81737 München (DE); Faerber, Michael, 82515 Wolfratshausen (DE); Isaacs, Kenneth, Bournemouth, Dorset BH7 7HF (GB); Krause, Joern, Dr., 12107 Berlin (DE)

(57) **Zusammenfassung**

Verfahren zur Übertragung von Informationen über Funkzellen in einem Funk-Kommunikationssystem, das zumindest zwei Übertragungsverfahren aufweist, bei dem
von einer Basisstation mit zumindest einer Funkzelle zumindest eine System Information mit zumindest einer systemindividuellen Nachbarzelliste zu einer Teilnehmerstation gesendet wird, und die Nachbarzelliste für eine Verbindungssteuerung verwendet wird.

## Beschreibung

### Einleitung und Stand der Technik

Für die Funktion von Cell-Reselektion und Handover in Mobilfunksystemen ist es notwendig, daß in jeder Zelle Informationen über die umgebenden Zellen ausgesendet werden. Dadurch wird zum einen gewährleistet, daß eine Teilnehmerstation MS ohne größere Verzögerung und schon vorab gezielt Nachbarzellen monitoren kann, welche für einen Zellwechsel im Idle-(Cell-Reselection) oder Connected- (Handover) Mode in Frage kommen. Zum zweiten wird dadurch erreicht, daß der Betreiber eines Mobilfunksystems (sofern die gesamte Funkversorgung bezüglich der Netzabdeckung hinreichend gut ist) steuern kann, daß eine Teilnehmerstation MS in dem Funknetz des Betreibers bleibt bzw. nur in andere erlaubte Funknetze wechselt.

Bei dem bekannten GSM-Mobilfunksystem ist diese Information durch das Aussenden von sogenannten System Informations auf dem Broadcast Channel BCCH (relevant für Idle Mode) und auf dem Slow Associated Control Channel SACH (relevant für Connected Mode, hier kann der Inhalt der System Information auch spezifisch für die jeweilige Teilnehmerstation sein) gelöst.

### Beschreibung des zu lösenden Problems

Mit der Einführung neuer Mobilfunksysteme der dritten Generation wie z.B. UMTS-TDD oder UMTS-FDD ergibt sich die Notwendigkeit sogenannte Multimode-Teilnehmerstationen (z.B. GSM und UMTS-TDD und/oder UMTS-FDD) betreiben zu können. Grund hierfür ist u.a. die bereits bestehende breite Funkversorgung durch das GSM-Mobilfunksystem und die Verfügbarkeit von UMTS vorerst hauptsächlich in Ballungsgebieten.

Diese Multimode-Teilnehmerstationen sollen ebenfalls Netzwerk-gesteuert Cell-Reselection (Idle- und evtl. Packt Mode) und Handover (Connected Mode) durchführen, dies soll aber zusätzlich auch zwischen den verschiedenen Funksystemen geschehen. Hierzu müssen existierende System Informationen über die Nachbarzellen in solcher Weise erweitert werden, daß ältere Mobilstationen, welche diese Erweiterungen nicht "erkennen", durch diese Erweiterungen nicht gestört werden (Problem der Cross-Phase-Compatibility).

Im folgenden wird erläutert, wie diese Aufgabe gelöst wird.

### Erfindungsgemäße Lösung

Diese Aufgabe wird durch die Einführung von separaten Nachbarzellisten gelöst, welche ihrerseits wieder in System Information Messages gesendet werden. Die Separierung der Nachbarzellen erfolgt dabei vorrangig nach dem Typ des Systems, zu welchem die Zelle gehört (Beispiele: FDD-symmetrisch, TDD, TDD-no voice o.ä.). Der Inhalt und die Struktur der Inhalte der Einträge in die jeweilige Nachbarzelliste, kann ebenfalls von System zu System unterschiedlich sein, beispielsweise ist bei FDD nur der Code für eine zu überwachende Nachbarzelle anzugeben, wohingegen bei TDD zusätzlich noch die Zeitschlitznummer anzugeben ist.

Jede Nachbarzelliste beginnt mit einem IEI (Information Element Identifiers), welcher, da die Nachbarzelliste systemspezifisch ist, selber auch systemspezifisch ist, und einem Längenindikator, welcher die Länge (in Bit oder Byte) der Nachbarzelliste angibt. Alternativ kann auch mit dem Längenindikator begonnen werden.

Die Inhalte dieser Listen können prinzipiell auch noch dynamisch während des Betriebs der Zelle geändert werden, wobei die Änderungszyklen nicht kleiner als einige Sekunden werden sollten. Basis dieser Änderungen könnte beispielsweise eine ermittelte aktuelle Verkehrslast sein, d.h. überlastete Nachbarzellen werden aus der Nachbarzelliste herausgenommen und dadurch von sich bewegenden Teilnehmerstationen nicht mehr selektiert.

Weiterhin können die Listen für Idle und Connected Mode unterschiedlich sein. Bezüglich dieser Erfindung führt das z.B. zur Vermeidung der Übertragung nicht benötigter Informationen, indem im Connected Mode der MS nur die Nachbarzellisten für die Systeme gesendet werden, welche die Teilnehmerstation auch tatsächlich unterstützt. Dieses entspricht einer spezifischen Pre-Selektion der Nachbarzellisten.

Im Idle Mode, optional aber auch im Connected Mode, hingegen kann die Teilnehmerstation selber selektieren, welche der Nachbarzellisten für sie relevant sind. Dies geschieht anhand des IEI (Information Element Identifiers) und des Längen Indicators.

Die Vorteile dieser Lösung bestehen in folgenden Punkten:
1. Einfache Erweiterbarkeit auf Handover zu Zellen neuer Funksysteme ohne Kompatibilitätsprobleme mit existierenden Teilnehmerstationen.
2. Durch Steuerung des Inhalts der Listen und der Verwendung der Listen an sich kann durch das Netz gesteuert werden, welche Zellen für Zellreselektion überhaupt in Frage kommen.
3. Es wird vermieden, daß für jedes neue Funksystem, über welches entsprechende Multimode-Teilnehmerstationen informiert werden müssen, eine neue System Information Message eingeführt werden muß, welche nur von den neuen Multimode-Teilnehmerstationen und anderen neuen Teilnehmerstationen erkannt werden.

1. und 3. werden erfindungsgemäß ermöglicht, weil die Teilnehmerstation auch bei unbekannten IEIs wegen der bekannten Länge, die beispielsweise im zweiten Octet des Informations Elements zu finden ist, in einfacher Weise unbekannte Informationselemente mit unbekanntem IEI einfach überspringen kann.

Darstellung von Ausführungsbeispielen der Erfindung
- Fig. 1: Blockschaltbild eines Mobilfunksystems,

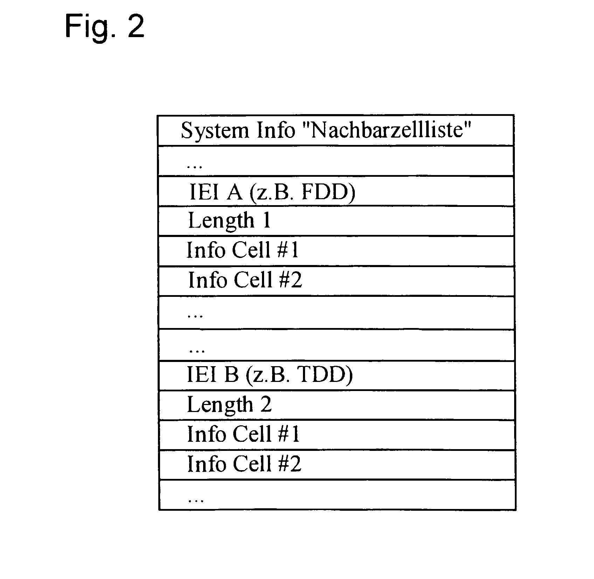

- Fig. 2: Beispiel für eine System Information, die Nachbarzellisten für FDD-Zellen und TDD-Zellen enthält,

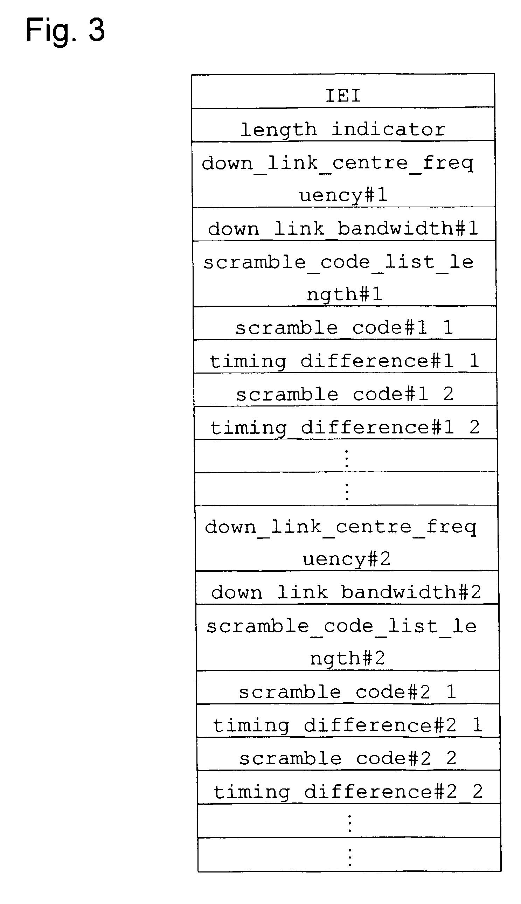

- Fig. 3: Detailierteres Beispiel der Inhalte einer Nachbarzelliste für FDD-Zellen,

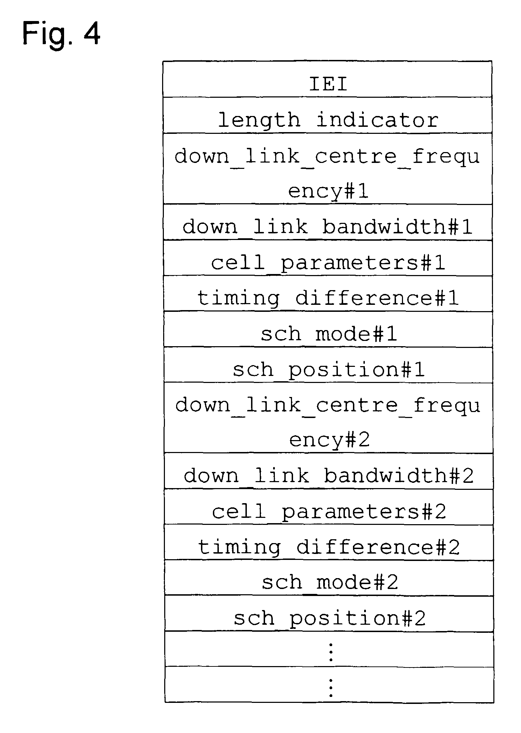

- Fig. 4: Detailierteres Beispiel der Inhalte einer Nachbarzelliste für TDD-Zellen.

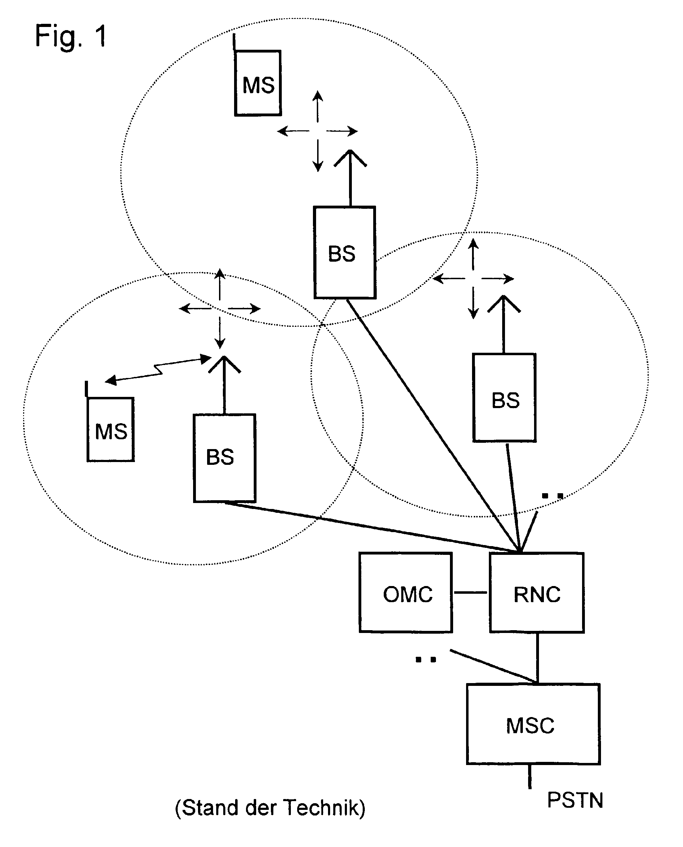

Das in Fig. 1 dargestellte und als ein Mobilfunksystem ausgestaltete Funk-Kommunikationssystem entspricht in seiner Struktur einem bekannten GSM-Mobilfunksystem, das aus einer Vielzahl von Mobilvermittlungsstellen MSC besteht, die untereinander vernetzt sind bzw. den Zugang zu einem Festnetz PSTN herstellen. Weiterhin sind diese Mobilvermittlungsstellen MSC mit jeweils zumindest einer Einrichtung zur Zuweisung funktechnischer Ressourcen RNC verbunden. Jede dieser Einrichtungen RNC ermöglicht wiederum eine Verbindung zu zumindest einer Basisstation BS. Diese Basisstation BS ist eine Funkstation, die über eine Funkschnittstelle Kommunikationsverbindungen zu Teilnehmerstationen MS, die als Mobilstationen ausgestaltet sein können, aufbauen und auslösen kann.

Durch jede Basisstation BS wird zumindest eine Funkzelle gebildet. Die Größe der Funkzelle wird in der Regel durch die Reichweite eines allgemeinen Signalisierungskanals BCCH (Broadcast Control Channel), der von den Basisstationen BS mit einer jeweils maximalen Sendeleistung gesendet wird, bestimmt. Bei einer Sektorisierung oder bei hierarchischen Zellstrukturen werden pro Basisstation BS auch mehrere Funkzellen versorgt. In gleicher Weise können von einer Basisstation BS sowohl das FDD- als auch das TDD-Übertragungsverfahren unterstützt werden, wobei in den unteren Hierarchieebenen beispielsweise das TDD-Übertragungsverfahren und in der obersten Hierarchieebene das FDD-Übertragungsverfahren verwendet wird.

## Patentansprüche

1. Verfahren zur Übertragung von Informationen über Funkzellen in einem Funk-Kommunikationssystem, das zumindest zwei Übertragungsverfahren (GSM, FDD, TDD) aufweist, bei dem von einer Basisstation (BS) mit zumindest einer Funkzelle zumindest eine System Information mit zumindest einer systemindividuellen Nachbarzelliste zu einer Teilnehmerstation (MS) gesendet wird, und die Nachbarzelliste für eine Verbindungssteuerung verwendet wird.
